# EUROPEAN PATENT SPECIFICATION

(11) **EP 4 484 804 B1**
(45) Date of publication and mention of the grant of the patent: **07.10.2026**
(21) Application number: 24156770.0
(22) Date of filing: 09.02.2024
(51) Int. Cl.: F16H 63/34

(54) **PARKING APPARATUS FOR VEHICLE**
PARKVORRICHTUNG FÜR EIN FAHRZEUG
APPAREIL DE STATIONNEMENT POUR VÉHICULE

(30) Priority: 30.06.2023 KR 20230084834
(43) Date of publication of application: 01.01.2025
(73) Proprietor: Hyundai Transys Inc., Chungcheongnam-do 31930 (KR)
(72) Inventor: LEE, Sang Ho, 18280 Hwaseong-si, Gyeonggi-do (KR); KIM, Young Kyu, 18280 Hwaseong-si, Gyeonggi-do (KR); SHIN, Hae Jeong, 18280 Hwaseong-si, Gyeonggi-do (KR)
(74) Representative: Viering, Jentschura & Partner mbB Patent- und Rechtsanwälte

(56) References cited:
- CN-A- 112 360 975
- CN-B- 107 725 765
- DE-T5- 112020 007 342

## Description

### BACKGROUND

### FIELD

The present invention relates to a parking apparatus for a vehicle, and more particularly, to a parking apparatus for a vehicle, which can prevent damage to a parking rod part of a vehicle.

### DISCUSSION OF THE BACKGROUND

A parking apparatus for a vehicle is constructed in a way that when a driving part operates, the rotation of the parking apparatus is delivered to a manual shaft and a rod assembly assembled with the manual shaft lifts a sprag.

When a parking (P) gear of the vehicle is released in the state in which the vehicle is in a parking (P) gear retention state on a gradient road having a tilt, the parking gear is rotated by strong rotatory power that is generated by parking gear torque due to the gradient or vehicle weight of the vehicle. If the parking gear is disposed in one axis thereof, the parking gear is rotated at a faster angular speed.

At this time, the sprag attempts to go in between the teeth of the parking (P) gear by a restoring force attributable to a rod spring before the rod assembly reaches a location that has deviated from the parking (P) gear, so that racheting occurs between the parking (P) gear and the sprag. The parking function of the parking (P) gear may be lost because the sprag damages the parking rod. Accordingly, it is necessary to improve such racheting.

The Background technology of the present invention is disclosed in KR 10 2018 106 184 A (Korean Patent Application Publication No. 10-2018-0106184, laid open on October 01, 2018 and entitled "PARKING APPARATUS OF VEHICLE"). From DE 11 2020 007342 T5 a parking apparatus for a vehicle according to the preamble of claim 1 is known. From CN 107 725 765 B and CN 112 360 975 A further designs for a parking apparatus for a vehicle are known.

### SUMMARY

Various embodiments are directed to providing a parking apparatus for a vehicle, which can prevent damage to a parking rod part of a vehicle. Thereto, the present invention provides a parking apparatus for a vehicle according to claim 1. Further preferred embodiments are subject of the dependent claims.

The parking apparatus for a vehicle according to the invention includes a driving part, a detent lever part connected to a central axis of the driving part and rotated in response to a rotation of the central axis, a parking rod part moved in a straight line in response to the rotation of the detent lever part, a sprag part configured to come into contact with the parking rod part and to move up and down in response to the movement of the parking rod part, and a parking gear part disposed over the sprag part, geared by the rise of the sprag part, and configured to have it rotation restricted.

According to the present invention, the parking rod part includes a parking rod transfer part geared with the detent lever part and moved forward and backward in response to the rotation of the detent lever part, a parking rod body part mounted on the parking rod transfer part and formed in the length direction of the sprag part, and a parking rod cam part mounted on an end of the parking rod body part and configured to come into contact with the sprag part and move the sprag part up and down.

According to the present invention, the parking rod cam part includes a parking rod cam body part mounted on an end of the parking rod body part and formed in a taper shape so that the size of an external diameter of the parking rod cam body part is reduced from the parking rod body part toward the outside of the parking rod cam body part, and a parking cam pipe part mounted on the parking rod cam body part and formed in the form of a cylinder having a diameter smaller than the external diameter of the parking rod cam body part.

According to a preferred embodiment of the present invention, the parking rod cam part further includes a cam tilting part that is formed between the parking rod cam body part and the parking cam pipe part and that is formed in a taper shape so that the size of an external diameter of the cam tilting part is reduced from the parking rod cam body part toward the parking cam pipe part.

A tilt angle of the cam tilting part is preferably formed to be greater than a tilt angle of the parking rod cam body part.

According to the present invention, the sprag part includes a support body part, a sprag body part rotatably mounted on the support body part, a sprag contact part formed on one side, a lower side of the sprag body part and configured to come into contact with the parking rod part, a sprag protrusion part formed on the other side, the upper side of the sprag body part and inserted into the parking gear part when the sprag body part rises up, and a sprag stopper part configured to protrude from the sprag body part and to come into contact with the parking rod cam body part.

According to the present invention, the height of the sprag stopper part that protrudes from the sprag body part is set so that the sprag contact part and the parking cam pipe part are constructed to be spaced apart from each other when the sprag stopper part comes into contact with the parking rod cam body part.

The sprag stopper part may be formed to be downward tilted from the support body part toward the sprag contact part along the taper shape of the parking rod cam body part.

According to the parking apparatus for a vehicle according to an embodiment of the present invention, although racheting occurs between the sprag part and the parking gear part when the parking (P) gear is released, the sprag part is geometrically robust because the sprag part does not come into direct contact with the parking rod body part of the parking rod part, and can operate normally without affecting a behavior of the parking rod cam part of the parking rod part because the sprag part does not impact on the parking rod cam part of the parking rod part.

Furthermore, according to an embodiment of the present invention, a parking operation of a vehicle can be implemented without deforming another part because the sprag stopper part of the sprag part has a structure that makes a line contact with the parking rod cam part.

### BRIEF DESCRIPTION OF THE DRAWINGS

FIG. 1 is a perspective view schematically illustrating a parking apparatus for a vehicle according to an embodiment of the present invention.
FIG. 2 is a perspective view schematically illustrating major components of the parking apparatus for a vehicle according to an embodiment of the present invention.
FIG. 3 is a front view schematically illustrating a parking apparatus for a vehicle according to an embodiment of the present invention.
FIG. 4 is a front view schematically illustrating major components of the parking apparatus for a vehicle according to an embodiment of the present invention.
FIG. 5 is a front view schematically illustrating a sprag part and a parking rod cam part of a parking rod part in the parking apparatus for a vehicle according to an embodiment of the present invention.
FIG. 6 is a front view schematically illustrating operations of the sprag part and the parking rod cam part of the parking rod part in the parking apparatus for a vehicle according to an embodiment of the present invention.
FIG. 7 is a front view schematically illustrating the state in which a vehicle is in a parking (P) gear state in the parking apparatus for a vehicle according to an embodiment of the present invention.
FIG. 8 is a front view schematically illustrating that a vehicle is in a parking (P) gear release state in the parking apparatus for a vehicle according to an embodiment of the present invention.
FIG. 9 is a front view schematically illustrating the state in which a vehicle is in the parking (P) gear release state in the parking apparatus for a vehicle according to an embodiment of the present invention.

### DETAILED DESCRIPTION OF THE ILLUSTRATED EMBODIMENTS

Hereinafter, a parking apparatus for a vehicle according to embodiments of the present invention will be described with reference to the accompanying drawings. In this process, the thicknesses of lines or the sizes of components illustrated in the drawings may have been exaggerated for the clarity of a description and for convenience' sake.

Furthermore, terms to be described below have been defined by taking into consideration their functions in the present invention, and may be changed depending on a user or operator's intention or practice, wherein the present invention is defined by the appended claims.

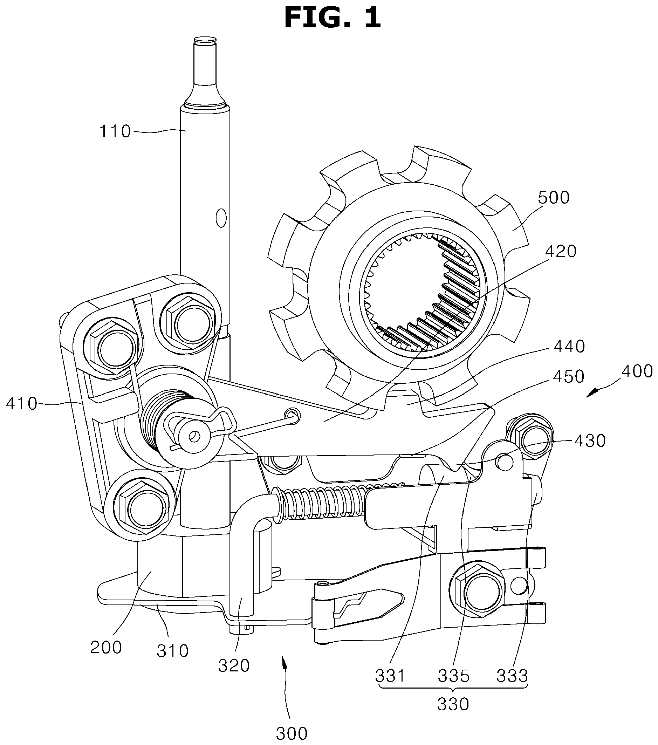

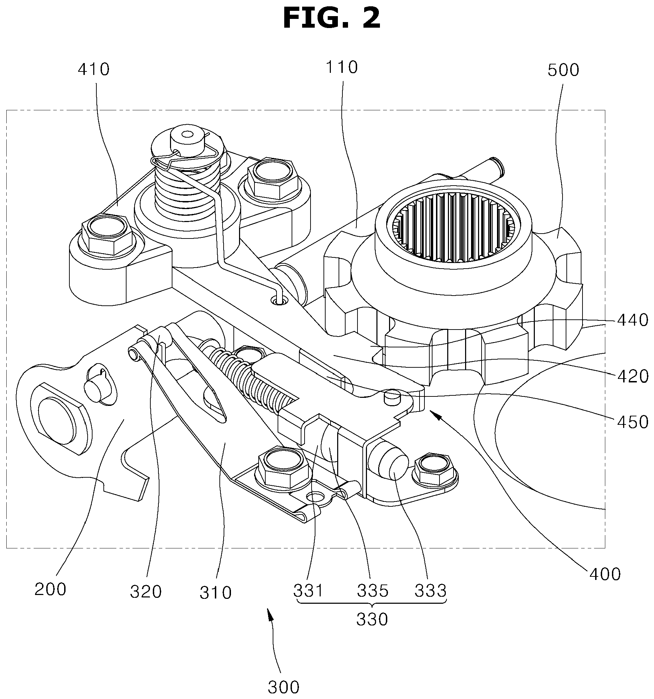

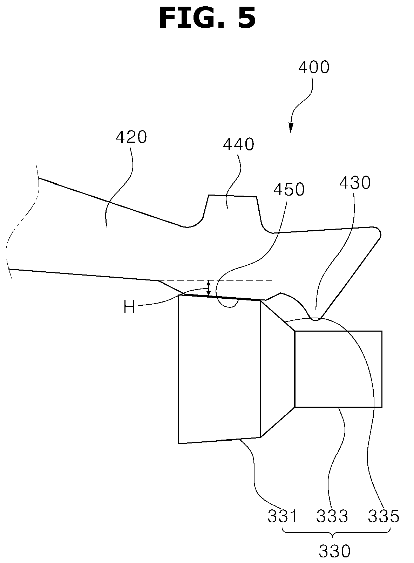

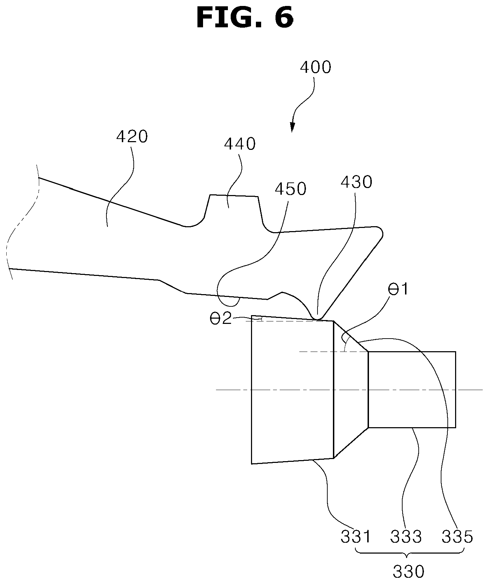

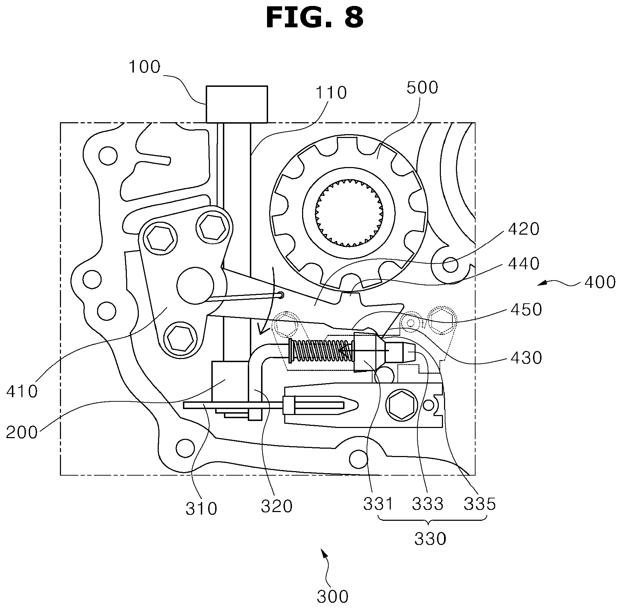

Referring to FIGS. 1 to 9, the parking apparatus for a vehicle according to an embodiment of the present invention includes a driving part 100, a detent lever part 200, a parking rod part 300, a sprag part 400, and a parking gear part 500.

The driving part 100 may be operated by a knob (not illustrated) that is mounted on a driver's seat. The driving part 100 has a central axis 110 and may further consist of an actuator and a motor having the central axis 110. The central axis 110 of the driving part 100 is connected to the detent lever part 200.

The detent lever part 200 is connected to the central axis 110 of the driving part 100, and is rotated in response to the rotation of the central axis 110.

The detent lever part 200 is engaged with a parking rod transfer part 310 of the parking rod part 300. The rotated detent lever part 200 may be restricted by a spring 250 by a certain degree or more. The detent lever part 200 may return to its original location by the spring 250. The spring 250 may have one side fixed to a housing and the other side connected to the detent lever part 200.

The parking rod part 300 is moved in a straight line in response to the rotation of the detent lever part 200. The parking rod part 300 is engaged with the gear of the detent lever part 200, and is moved forward and backward in a straight line in response to the rotation of the detent lever part 200.

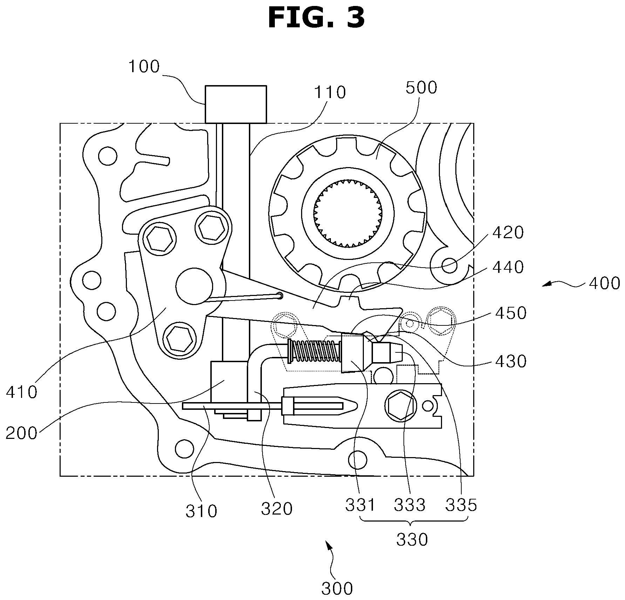

The parking rod part 300 includes the parking rod transfer part 310, a parking rod body part 320, and a parking rod cam part 330. The parking rod transfer part 310 is geared with the detent lever part 200, and is moved forward and backward (on the basis of FIGS. 1 and 3) in response to the rotation of the detent lever part 200.

The parking rod transfer part 310 is composed of a rack gear. Accordingly, the parking rod transfer part 310 that consists of the rack gear is moved forward and backward in a straight line with respect to the detent lever part 200 that is rotated.

The parking rod body part 320 is mounted on the parking rod transfer part 310, and is formed in the length direction of the sprag part 400, preferably formed of a body having a long shape. The parking rod body part 320 may be formed to be bent in a "∟" form in order to avoid interference with a surrounding component.

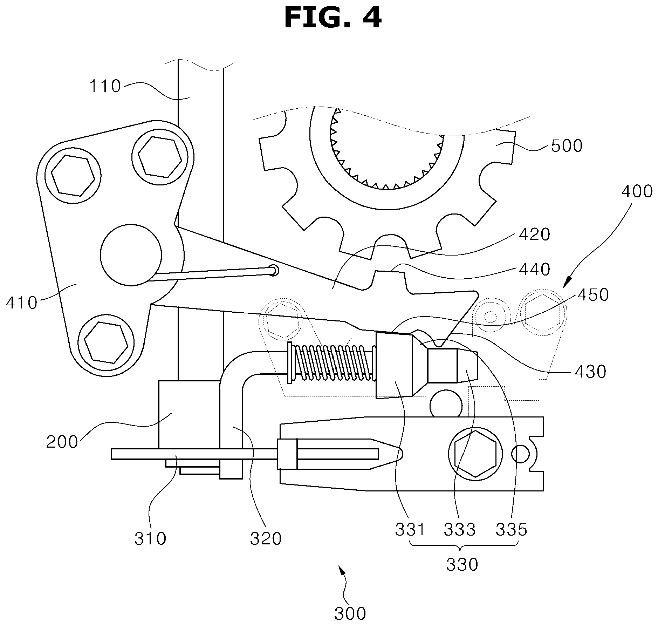

The parking rod cam part 330 is mounted on an end (on a right end on the basis of FIG. 4) of the parking rod body part 320, comes into contact with the sprag part 400, and moves the sprag part 400 up and down. A surface of the parking rod cam part 330, which comes into contact with the sprag part 400 as the parking rod body part 320 is moved forward and backward, is formed to a different external diameter. Accordingly, the sprag part 400 is moved up and down as the sprag part 400 comes into contact with the parking rod cam part 330.

The parking rod cam part 330 includes a parking cam body part 331 and a parking cam pipe part 333. The parking cam body part 331 is mounted on the end (on the right end on the basis of FIG. 4) of the parking rod body part 320, and is formed in a taper shape so that the size of the external diameter of the parking cam body part 331 is reduced from the parking rod body part 320 to the outside thereof.

The parking cam body part 331 is tapered from the end of the parking rod body part 320 toward the outside (on the right side on the basis of FIG. 4) thereof, so that the size of the external diameter of the parking cam body part 331 is reduced. That is, the size of the external diameter of the parking cam body part 331 is reduced from the parking rod body part 320 toward the parking cam pipe part 333. Accordingly, the parking cam body part 331 is formed to be downward tilted from the parking rod body part 320 toward the parking cam pipe part 333.

The parking cam body part 331 is tapered so that the external diameter thereof is gradually reduced, makes contact, preferably a line contact, with a sprag stopper part 450 of the sprag part 400, and thus can protect the parking rod part 300 although racheting occurs between the parking cam body part 331 and the sprag stopper part 450.

The parking cam pipe part 333 is mounted on the parking cam body part 331, and is formed in the form of a cylinder having a diameter smaller than the external diameter of the parking cam body part 331. The parking cam pipe part 333 may come into contact with a sprag contact part 430 of the sprag part 400.

The parking rod cam part 330 may further include a cam tilting part 335. The cam tilting part 335 may be formed between the parking rod cam body part 331 and the parking cam pipe part 333, and may be formed in a taper shape so that the size of the external diameter of the cam tilting part 335 is reduced from the parking rod cam body part 331 toward the parking cam pipe part 333.

The sprag stopper part 450 may come into contact with a surface of the cam tilting part 335. The cam tilting part 335 is formed in the taper shape so that the size of the external diameter of the cam tilting part 335 is reduced from the parking rod cam body part 331 toward the parking cam pipe part 333. Accordingly, an impact on the sprag stopper part 450 can be reduced because the contact area and contact time of the sprag stopper part 450 are increased as the sprag contact part 430 is moved along the surface of the cam tilting part 335.

A tilt angle θ1 of the cam tilting part 335 may be formed to be greater than a tilt angle θ2 of the parking rod cam body part 331. Since the tilt angle θ1 of the cam tilting part 335 is formed to be greater than the tilt angle θ2 of the parking rod cam body part 331, the sprag contact part 430 is moved along the surface of the parking rod cam body part 331 and moved to the cam tilting part 335, and the contact area and contact time of the sprag stopper part 450 with the parking rod cam body part 331 can be increased.

The sprag part 400 comes into contact with the parking rod part 300, and is moved up and down in response to a movement of the parking rod part 300.

The sprag part 400 comes into contact with the parking rod part 300, and is moved up and down in response to a movement of the parking rod part 300. The sprag part 400 may rise and come into contact with the parking gear part 500, and may restrict the rotation of the parking gear part 500. That is, when the rotation of the parking gear part 500 is restricted by the sprag part 400, a vehicle may be in a parking (P) gear state.

When the sprag part 400 falls and deviates from the parking gear part 500, the parking gear part 500 may be rotated. That is, when the sprag part 400 deviates from the parking gear part 500, the vehicle may not be in the parking (P) gear state.

The sprag part 400 includes a support body part 410, a sprag body part 420, the sprag contact part 430, the sprag protrusion part 440, and the sprag stopper part 450.

The support body part 410 is mounted on the housing, and rotatably supports the sprag body part 420.

The sprag body part 420 may have one end (a left end on the basis of FIG. 4) rotatably mounted on the support body part 410. The sprag body part 420 may be rotated around the support body part 410 when the sprag contact part 430 is moved up and down along a surface of the sprag contact part 430, which comes into contact with the parking rod cam part 330 of the parking rod part 300.

The sprag contact part 430 is formed to protrude from one side (a lower side on the basis of FIG. 4) of the sprag body part 420, and comes into contact with the parking rod part 300. As the sprag contact part 430 passes through the parking rod cam body part 331 and parking cam pipe part 333 of the parking rod cam part 330, the sprag part 400 may be moved up and down.

The sprag part 400 may rise as the sprag contact part 430 is moved from the parking cam pipe part 333 toward the parking rod cam body part 331, and may fall as the sprag contact part 430 is moved from the parking rod cam body part 331 to the parking cam pipe part 333.

As the sprag contact part 430 passes through the parking cam body part 331 and parking cam pipe part 333 of the parking rod cam part 330, the sprag body part 420 of the sprag part 400 may be moved up and down. That is, the sprag contact part 430 may rise as the sprag contact part 430 is moved from the parking cam pipe part 333 toward the parking cam body part 331, and may fall as the sprag contact part 430 is moved from the parking cam body part 331 toward the parking cam pipe part 333.

The sprag protrusion part 440 is formed to protrude from the other side (an upper side on the basis of FIG. 4) of the sprag body part 420, and is inserted into the parking gear part 500 when the sprag body part 420 rises. The sprag protrusion part 440 may deviate from the parking gear part 500 when the sprag body part 420 falls. When the sprag protrusion part 440 is inserted into the parking gear part 500, the rotation of the parking gear part 500 may be restricted.

The sprag stopper part 450 protrudes from the sprag body part 420, preferably from the bottom (on the basis of FIG. 4) of the sprag body part 420, and comes into contact with the parking rod cam body part 331. The sprag stopper part 450 may be formed to be downward tilted from the support body part 410 toward the sprag contact part 430 along the taper shape of the parking rod cam body part 331.

The sprag stopper part 450 makes contact, preferably a line contact with the parking cam body part 331, and can protect the parking rod part 300 although racheting occurs between the sprag stopper part 450 and the parking cam body part 331.

The height H of the sprag stopper part 450 that protrudes from the sprag body part 420 is set so that the sprag contact part 430 and the parking cam pipe part 333 are spaced apart from each other when the sprag stopper part 450 comes into contact with the parking rod cam body part 331.

An impact on the sprag contact part 430 and the occurrence of noise in the sprag contact part 430, occurring when the sprag contact part 430 comes into contact with the parking cam pipe part 333, can be prevented because the height H of the sprag stopper part 450 that protrudes from the sprag body part 420 when the sprag stopper part 450 comes into contact with the parking rod cam body part 420 is set so that the sprag contact part 430 and the parking cam pipe part 333 are spaced apart from each other.

A plurality of gears is formed in an outer surface of the parking gear part 500. The parking gear part 500 is disposed over the sprag part 400. The rotation of the parking gear part 500 may be restricted as the sprag protrusion part 440 of the sprag part 400 is inserted and engaged with the gears of the parking gear part 500 by the rise of the sprag part 400.

That is, the rotation of the parking gear part 500 may be restricted by the sprag protrusion part 440 of the sprag part 400. When the sprag protrusion part 440 deviates from the parking gear part 500, the parking gear part 500 may be rotated. The parking gear part 500 can maintain the parking state (i.e., the parking (P) gear state) of the vehicle because the rotation of the parking gear part 500 is restricted by the sprag protrusion part 440 of the sprag part 400.

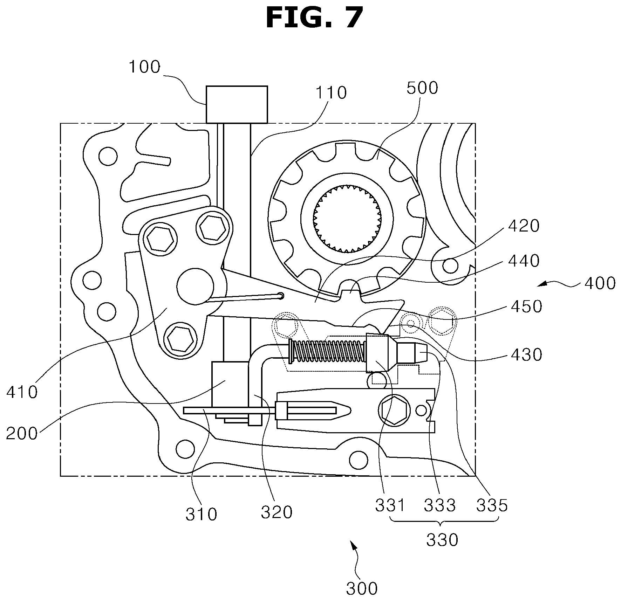

An operation of the parking apparatus for a vehicle according to an embodiment of the present invention is described with reference to FIGS. 7 to 9.

FIG. 7 is a front view schematically illustrating the state in which a vehicle is in the parking (P) gear state in the parking apparatus for a vehicle. Referring to FIG. 7, the detent lever part 200 is rotated by the driving part 100. The parking rod body part 320 may be moved in a left direction thereof by the gearing of the detent lever part 200 and the parking rod transfer part 310 of the parking rod part 300. As the parking rod body part 320 is moved, a location of the sprag protrusion part 440 of the sprag part 400 at which the sprag protrusion part 440 comes into contact with the parking cam pipe part 333 is changed.

That is, as the sprag protrusion part 440 of the sprag part 400 is moved from the parking cam body part 331 toward the parking cam pipe part 333, the sprag body part 420 may be rotated around the support body part 410, so that the sprag part 400 may fall.

The sprag stopper part 450 may be formed along the taper shape of the parking rod cam body part 331. Accordingly, the sprag stopper part 450 may be moved while making a line contact with the parking rod cam body part 331.

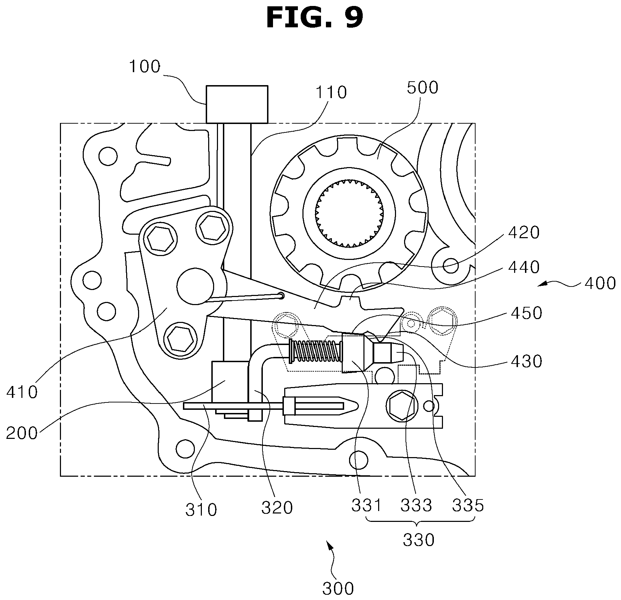

Referring to FIG. 9, the sprag protrusion part 440 of the sprag part 400 that has fallen may be separated from the parking gear part 500.

According to the parking apparatus for a vehicle according to an embodiment of the present invention, although racheting occurs between the sprag part 400 and the parking gear part 500 when the parking (P) gear is released, the sprag part 400 is geometrically robust because the sprag part 400 does not come into direct contact with the parking rod body part 320 of the parking rod part 300, and can operate normally without affecting a behavior of the parking rod cam part 330 of the parking rod part 300 because the sprag part 400 does not impact on the parking rod cam part 330 of the parking rod part 300.

Furthermore, according to an embodiment of the present invention, a parking operation of a vehicle can be implemented without deforming another component because the sprag stopper part 450 of the sprag part 400 has a structure that makes a line contact with the parking rod cam part 330.

The present invention has been described above based on the embodiments illustrated in the accompanying drawings, but the embodiments are merely illustrative. A person having ordinary knowledge in the art to which the present invention pertains will understand that various modifications and other equivalent embodiments are possible from the embodiments. Accordingly, the technical range of protection of the present invention should be determined by the claims.

## Claims

1. A parking apparatus for a vehicle, comprising:
a driving part (100);
a detent lever part (200) connected to a central axis (110) of the driving part (100) and rotated in response to a rotation of the central axis (110);
a parking rod part (300) moved in a straight line in response to the rotation of the detent lever part (200);
a sprag part (400) configured to come into contact with the parking rod part (300) and to move up and down in response to the movement of the parking rod part (300); and
a parking gear part (500) disposed over the sprag part (400), geared by a rise of the sprag part (400), and configured to have it rotation restricted,
wherein the parking rod part (300) comprises:
a parking rod transfer part (310) geared with the detent lever part (200) and moved forward and backward in response to the rotation of the detent lever part (200);
a parking rod body part (320) mounted on the parking rod transfer part (310) and formed in a length direction of the sprag part (400); and
a parking rod cam part (330) mounted on an end of the parking rod body part (320) and configured to come into contact with the sprag part (400) and move the sprag part (400) up and down,
wherein the parking rod cam part (330) comprises:
a parking rod cam body part (331) mounted on an end of the parking rod body part (320) and formed in a taper shape so that a size of an external diameter of the parking rod cam body part (331) is reduced from the parking rod body part (320) toward an outside of the parking rod cam body part (331); and
a parking cam pipe (333) part mounted on the parking rod cam body part (331) and formed in a form of a cylinder having a diameter smaller than the external diameter of the parking rod cam body part (331),
wherein the sprag part (400) comprises:
a support body part (410);
a sprag body part (420) rotatably mounted on the support body part (410);
a sprag contact part (430) formed on one side, a lower side of the sprag body part (420) and configured to come into contact with the parking rod part (300); and
a sprag protrusion part (440) formed on the other side, the upper side of the sprag body part (420) and inserted into the parking gear part (500) when the sprag body part (420) rises up,
**characterized in that**
the sprag part (400) further comprises a sprag stopper part (450) configured to protrude from the sprag body part (420) and to come into contact with the parking rod cam body part (331); and
a height of the sprag stopper part (450) that protrudes from the sprag body part (420) is set so that the sprag contact part (430) and the parking cam pipe part (333) are constructed to be spaced apart from each other when the sprag stopper part (450) comes into contact with the parking rod cam body part (331).

2. The parking apparatus for the vehicle of claim 1, wherein the parking rod cam part (330) further comprises a cam tilting part (335) that is formed between the parking rod cam body part (331) and the parking cam pipe part (333) and that is formed in a taper shape so that a size of an external diameter of the cam tilting part (335) is reduced from the parking rod cam body (331) part toward the parking cam pipe part (333).

3. The parking apparatus for the vehicle of claim 2, wherein a tilt angle of the cam tilting part (335) is formed to be greater than a tilt angle of the parking rod cam body part (331).

4. The parking apparatus for the vehicle of any one of claims 1 to 3, wherein the sprag stopper part (450) is formed to be downward tilted from the support body part (410) toward the sprag contact part (430) along the taper shape of the parking rod cam body part (331).

## Patentansprüche

1. Parkvorrichtung für ein Fahrzeug, aufweisend:
einen Antriebsteil (100),
einen Rasthebelteil (200), der mit einer Mittelachse (110) des Antriebsteils (100) verbunden ist und als Reaktion auf eine Drehung der Mittelachse (110) gedreht wird,
einen Parkstangenteil (300), der als Reaktion auf die Drehung des Rasthebelteils (200) in einer geraden Linie bewegt wird,
einen Blockierteil (400), der konfiguriert ist, um mit dem Parkstangenteil (300) in Kontakt zu kommen und sich als Reaktion auf die Bewegung des Parkstangenteils (300) auf und ab zu bewegen, und
einen Parkzahnradteil (500), der über dem Blockierteil (400) angeordnet ist, durch ein Anheben des Blockierteils (400) in Eingriff gebracht wird und konfiguriert ist, um seine Drehung eingeschränkt zu haben,
wobei der Parkstangenteil (300) aufweist:
einen Parkstangenübertragungsteil (310), der mit dem Rasthebelteil (200) in Eingriff ist und als Reaktion auf die Drehung des Rasthebelteils (200) vorwärts und rückwärts bewegt wird,
einen Parkstangenkörperteil (320), der an dem Parkstangenübertragungsteil (310) angebracht ist und in einer Längsrichtung des Blockierteils (400) ausgebildet ist, und
einen Parkstangennockenteil (330), der an einem Ende des Parkstangenkörperteils (320) angebracht ist und konfiguriert ist, um mit dem Blockierteil (400) in Kontakt zu kommen und den Blockierteil (400) auf und ab zu bewegen,
wobei der Parkstangennockenteil (330) aufweist:
einen Parkstangennockenkörperteil (331), der an einem Ende des Parkstangenkörperteils (320) angebracht ist und in einer Konusform ausgebildet ist, so dass sich eine Größe eines Außendurchmessers des Parkstangennockenkörperteils (331) von dem Parkstangenkörperteil (320) aus zu einer Außenseite des Parkstangennockenkörperteils (331) verringert, und
einen Parknockenrohrteil (333), der an dem Parkstangennockenkörperteil (331) angebracht ist und in einer Form eines Zylinders ausgebildet ist, der einen Durchmesser hat, der kleiner als der Außendurchmesser des Parkstangennockenkörperteils (331) ist,
wobei der Blockierteil (400) aufweist:
einen Stützkörperteil (410),
einen Blockierkörperteil (420), der drehbar an dem Stützkörperteil (410) angebracht ist,
einen Blockierkontaktteil (430), der an einer Seite, einer unteren Seite des Blockierkörperteils (420), ausgebildet ist und konfiguriert ist, um mit dem Parkstangenteil (300) in Kontakt zu kommen, und
einen Blockiervorsprungteil (440), der an der anderen Seite, der oberen Seite des Blockierkörperteils (420), ausgebildet ist und in den Parkzahnradteil (500) eingesetzt wird, wenn der Blockierkörperteil (420) nach oben angehoben wird,
**dadurch gekennzeichnet, dass**
der Blockierteil (400) ferner einen Blockieranschlagteil (450) aufweist, der konfiguriert ist, um von dem Blockierkörperteil (420) aus vorzustehen und mit dem Parkstangennockenkörperteil (331) in Kontakt zu kommen, und
eine Höhe des Blockieranschlagteils (450), der von dem Blockierkörperteil (420) aus vorsteht, so eingestellt ist, dass der Blockierkontaktteil (430) und der Parknockenrohrteil (333) so konstruiert sind, dass sie voneinander im Abstand sind, wenn der Blockieranschlagteil (450) mit dem Parkstangennockenkörperteil (331) in Kontakt kommt.

2. Parkvorrichtung für das Fahrzeug nach Anspruch 1, wobei der Parkstangennockenteil (330) ferner einen Nockenneigungsteil (335) aufweist, der zwischen dem Parkstangennockenkörperteil (331) und dem Parknockenrohrteil (333) ausgebildet ist und der in einer Konusform ausgebildet ist, so dass sich eine Größe eines Außendurchmessers des Nockenneigungsteils (335) von dem Parkstangennockenkörperteil (331) aus zu dem Parknockenrohrteil (333) hin verringert.

3. Parkvorrichtung für das Fahrzeug nach Anspruch 2, wobei ein Neigungswinkel des Nockenneigungsteils (335) so ausgebildet ist, dass er größer als ein Neigungswinkel des Parkstangennockenkörperteils (331) ist.

4. Parkvorrichtung für das Fahrzeug nach einem der Ansprüche 1 bis 3, wobei der Blockieranschlagteil (450) so ausgebildet ist, dass er von dem Stützkörperteil (410) aus zu dem Blockierkontaktteil (430) hin entlang der Konusform des Parkstangennockenkörperteils (331) nach unten geneigt ist.

## Revendications

1. Appareil de stationnement pour un véhicule, comprenant :
une partie d'entraînement (100) ;
une partie de levier de détente (200) reliée à un axe central (110) de la partie d'entraînement (100) et mise en rotation en réponse à une rotation de l'axe central (110) ;
une partie de tige de stationnement (300) déplacée en ligne droite en réponse à la rotation de la partie de levier de détente (200) ;
une partie de blocage (400) configurée pour venir en contact avec la partie de tige de stationnement (300) et pour se déplacer vers le haut et vers le bas en réponse au mouvement de la partie de tige de stationnement (300) ; et
une partie de pignon de stationnement (500) disposée au-dessus de la partie de blocage (400), engrenée par une montée de la partie de blocage (400), et configurée pour être limitée en rotation,
dans lequel la partie de tige de stationnement (300) comprend :
une partie de transfert de tige de stationnement (310) engrenée avec la partie de levier de détente (200) et déplacée vers l'avant et vers l'arrière en réponse à la rotation de la partie de levier de détente (200) ;
une partie de corps de tige de stationnement (320) montée sur la partie de transfert de tige de stationnement (310) et formée dans une direction de longueur de la partie de blocage (400) ; et
une partie de came de tige de stationnement (330) montée sur une extrémité de la partie de corps de tige de stationnement (320) et configurée pour venir en contact avec la partie de blocage (400) et déplacer la partie de blocage (400) vers le haut et vers le bas,
dans lequel la partie de came de tige de stationnement (330) comprend :
une partie de corps de came de tige de stationnement (331) montée sur une extrémité de la partie de corps de tige de stationnement (320) et formée en une forme conique de sorte qu'une taille d'un diamètre externe de la partie de corps de came de tige de stationnement (331) soit réduite de la partie de corps de tige de stationnement (320) vers un extérieur de la partie de corps de came de tige de stationnement (331) ; et
une partie de tuyau de came de stationnement (333) montée sur la partie de corps de came de tige de stationnement (331) et formée sous une forme d'un cylindre ayant un diamètre inférieur au diamètre externe de la partie de corps de came de tige de stationnement (331),
dans lequel la partie de blocage (400) comprend :
une partie de corps de support (410) ;
une partie de corps de blocage (420) montée de manière rotative sur la partie de corps de support (410) ;
une partie de contact de blocage (430) formée sur un côté, un côté inférieur de la partie de corps de blocage (420) et configurée pour venir en contact avec la partie de tige de stationnement (300) ; et
une partie de saillie de blocage (440) formée sur l'autre côté, le côté supérieur de la partie de corps de blocage (420) et insérée dans la partie de pignon de stationnement (500) lorsque la partie de corps de blocage (420) monte,
**caractérisé en ce que**
la partie de blocage (400) comprend en outre une partie de butée de blocage (450) configurée pour faire saillie de la partie de corps de blocage (420) et pour venir en contact avec la partie de corps de came de tige de stationnement (331) ; et
une hauteur de la partie de butée de blocage (450) qui fait saillie de la partie de corps de blocage (420) est réglée de sorte que la partie de contact de blocage (430) et la partie de tuyau de came de stationnement (333) sont construites pour être espacées l'une de l'autre lorsque la partie de butée de blocage (450) vient en contact avec la partie de corps de came de tige de stationnement (331).

2. Appareil de stationnement pour le véhicule selon la revendication 1, dans lequel la partie de came de tige de stationnement (330) comprend en outre une partie d'inclinaison de came (335) qui est formée entre la partie de corps de came de tige de stationnement (331) et la partie de tuyau de came de stationnement (333) et qui est formée en une forme conique de sorte qu'une taille d'un diamètre externe de la partie d'inclinaison de came (335) soit réduite de la partie de corps de came de tige de stationnement (331) vers la partie de tuyau de came de stationnement (333).

3. Appareil de stationnement pour le véhicule selon la revendication 2, dans lequel un angle d'inclinaison de la partie d'inclinaison de came (335) est formé pour être supérieur à un angle d'inclinaison de la partie de corps de came de tige de stationnement (331).

4. Appareil de stationnement pour le véhicule selon l'une quelconque des revendications 1 à 3, dans lequel la partie de butée de blocage (450) est formée pour être inclinée vers le bas de la partie de corps de support (410) vers la partie de contact de blocage (430) le long de la forme conique de la partie de corps de came de tige de stationnement (331).
